Europäisches Patentamt

European Patent Office

Office européen des brevets

(19)

(11) Publication number: **0 456 872 A1**

# EUROPEAN PATENT APPLICATION

(21) Application number: 90109425.0

(22) Date of filing: 18.05.90

(51) Int. Cl.5: **H02J 3/14, A47J 27/62**

Amended claims in accordance with Rule 86 (2) EPC.

(43) Date of publication of application:
21.11.91 Bulletin 91/47

(84) Designated Contracting States:
AT BE CH DE DK ES FR GB GR IT LI LU NL SE

(71) Applicant: FOOD AUTOMATION-SERVICE
TECHNIQUES, INC.
905 Honeyspot Road
Stratford, Connecticut 06497(US)

(72) Inventor: Lance, M. Albrecht
12010 Laurel Road
Chester, OH 44026(US)
Inventor: Schreyer, William M.
872 Judd Road
Monroe, CT 06468(US)
Inventor: Pasquini, Mario
7 Little Pond Road
Milford, CT 06460(US)

(74) Representative: Schickedanz, Willi, Dipl.-Ing.
Langener Strasse 68
W-6050 Offenbach/Main(DE)

(54) **Food-processing apparatus.**

(57) Food-processing apparatus for controlling the power utilized by a system including a plurality of electrical loads comprises a computer for controlling the duty cycle of each of the loads. The computer is responsive to the actual power demand of the loads for determining whether a predetermined limit for maximum power demand for the system will be exceeded by the actual power demand. If the predetermined limit for maximum power demand will be exceeded by the actual power demand, the computer reduces the duty cycle of at least one of the loads to reduce the actual power demand.

EP 0 456 872 A1

This invention relates to food-processing apparatus and, more particularly, to food-processing apparatus for controlling the power utilized by a system including a plurality of electrical loads. The electrical loads preferably comprise cooking devices, for example, deep vat fryers and various types of ovens, cooling devices, for example, refrigerators, and air conditioning devices which may, for example, air condition the environment of a fast food restaurant.

Ordinarily one of the key parameters in determining electrical rates charged by a utility is determined by the peak power load within a specific period of time. For example, a customer may use an average power of 12 kilowatts for 10 hours and then use 0 kilowatts for the remaining 12 hours of the day for a total of 120 kilowatt hours. The utility may charge 10¢ per kilowatt hour for a total charge of $12.00 per day.

However, if the customer requires 120 kilowatts for ten minutes, six times a day or 120 kilowatt hours, the utility would charge the customer a higher rate because the apparatus required to deliver that power has to be much larger (i.e. 120 kilowatts) than the apparatus required to deliver 12 kilowatts.

For the sake of efficiency and minimizing costs, the operator of a fast food restaurant may control when various loads are turned on in accordance with the invention. A minimum peak power can be achieved by limiting the number of loads that are turned on at any one time. Moreover, the loads can be prioritized so that desired loads can be serviced first under program control as selected by the operator and under software control, depending on the nature of the load and its relative priority or importance to the store application.

It is an object of the present invention, therefore, to provide a new and improved food-processing apparatus which avoids one or more of the disadvantages of prior such apparatus.

It is another object of the invention to provide a new and improved food-processing apparatus capable of automatically controlling the maximum power demand by the apparatus.

It is another object of the invention to provide a new and improved food-processing apparatus capable of automatically controlling the peak power demand of the apparatus in accordance with the relative priorities of loads on the apparatus.

It is another object of the invention to provide a new and improved food-processing apparatus which is capable of controlling the peak power demand of cooking devices, cooling devices and air conditioning devices in accordance with the relative priorities thereof.

It is another object of the invention to provide a new and improved food-processing apparatus which is capable of communicating between controllers of a plurality of control systems of the apparatus.

In accordance with the invention, food-processing apparatus for controlling the power utilized by a system including a plurality of electrical loads comprises computer control means coupled to a plurality of electrical loads for controlling the duty cycle of each of the loads. The apparatus also includes means responsive to the actual power demand of the loads for determining whether a predetermined limit for maximum power demand for the system will be exceeded by the actual power demand of the loads. The apparatus also includes means responsive to the determining means if the predetermined limit for maximum power demand will be exceeded by actual power demand for reducing the duty cycle of at least one of the loads to reduce the actual power demand.

For a better understanding of the present invention, together with other and further objects thereof, reference is made to the following description, taken in connection with the accompanying drawings, and its scope will be pointed out in the appended claims.

Referring now to the drawings:

Fig. 1 is a schematic diagram of food-processing apparatus constructed in accordance with the invention;

Fig. 2 is a schematic diagram of another embodiment of the apparatus constructed in accordance with the invention;

Figs 3 and 4 are flow charts comprising a representation of portions of a microcomputer which operates according to a computer program produced according to the flow chart; and

Figs. 5-9 are flow charts comprising representations of portions of microcomputers which operate according to computer programs produced according to the flow charts.

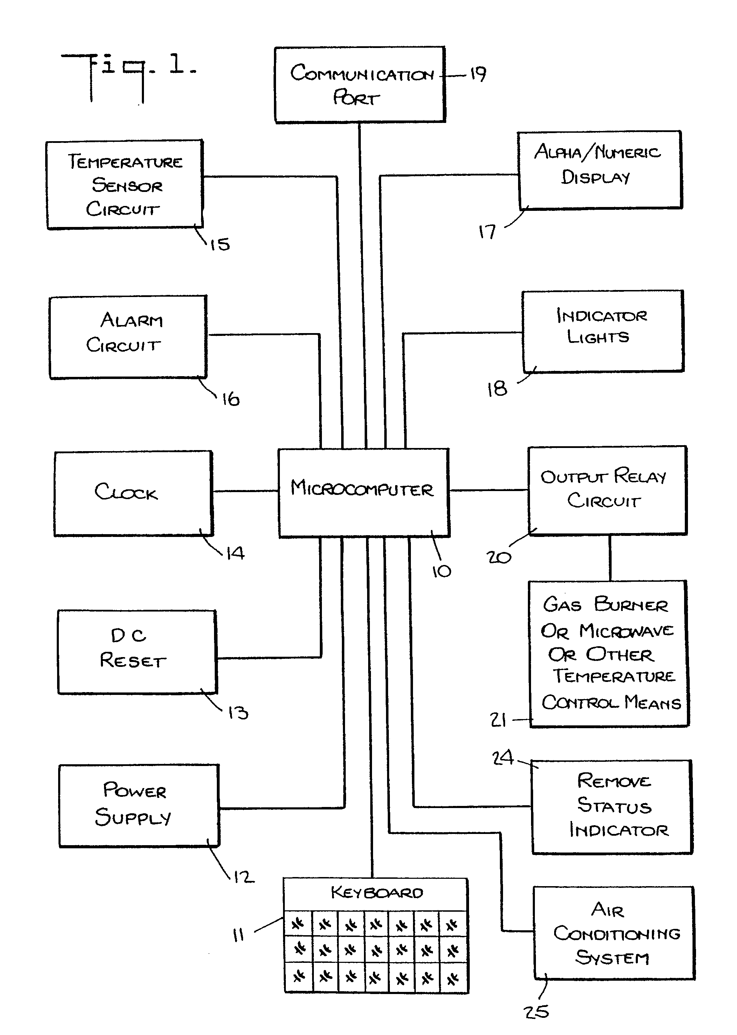

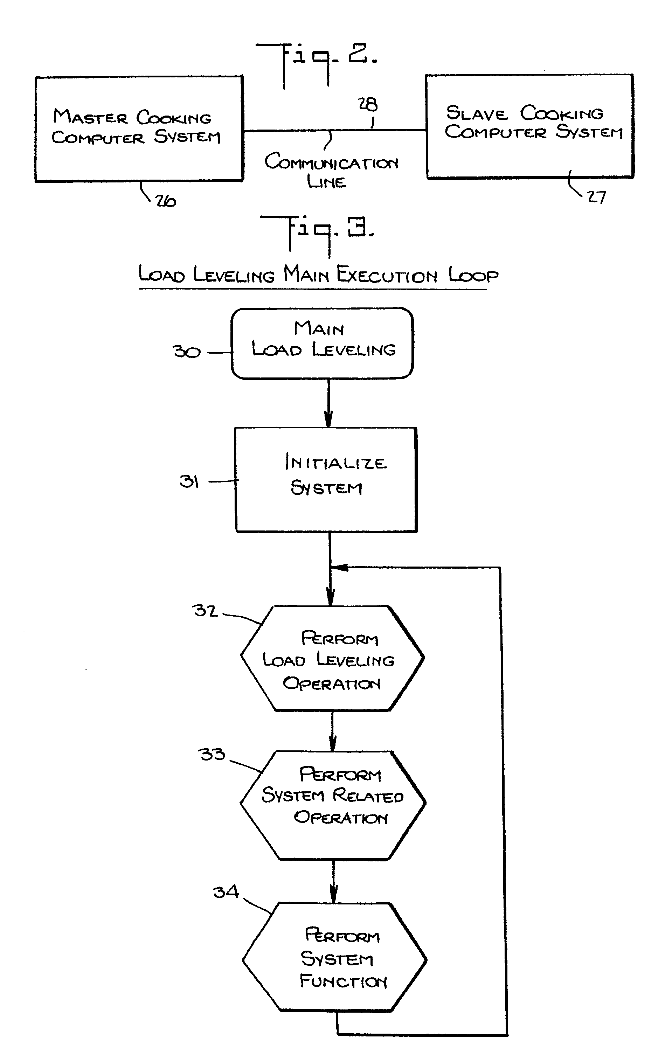

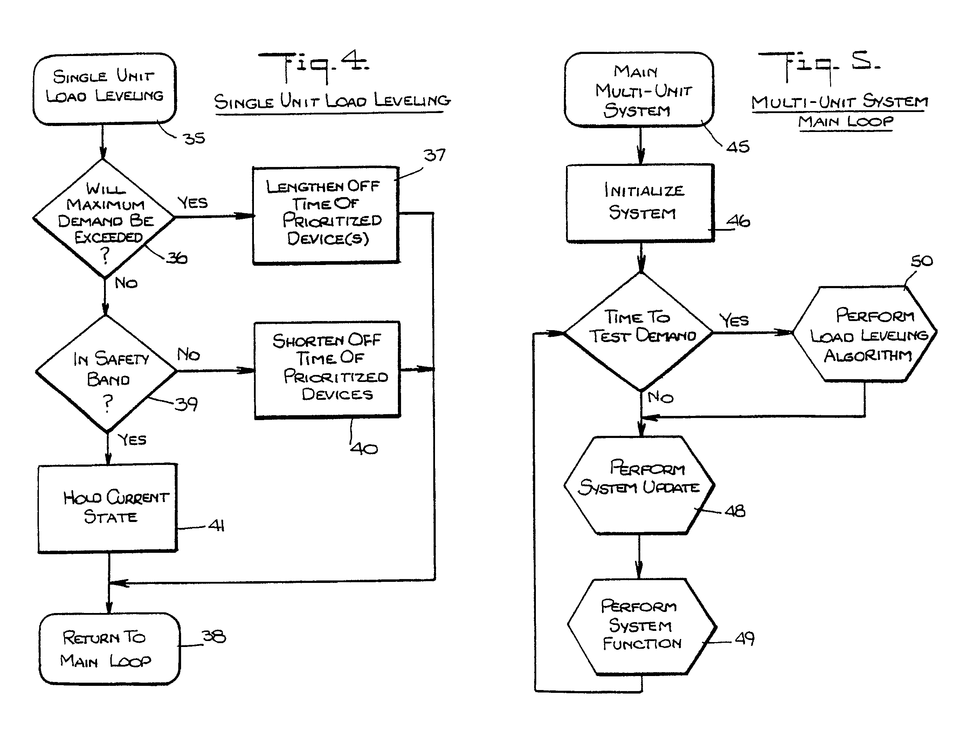

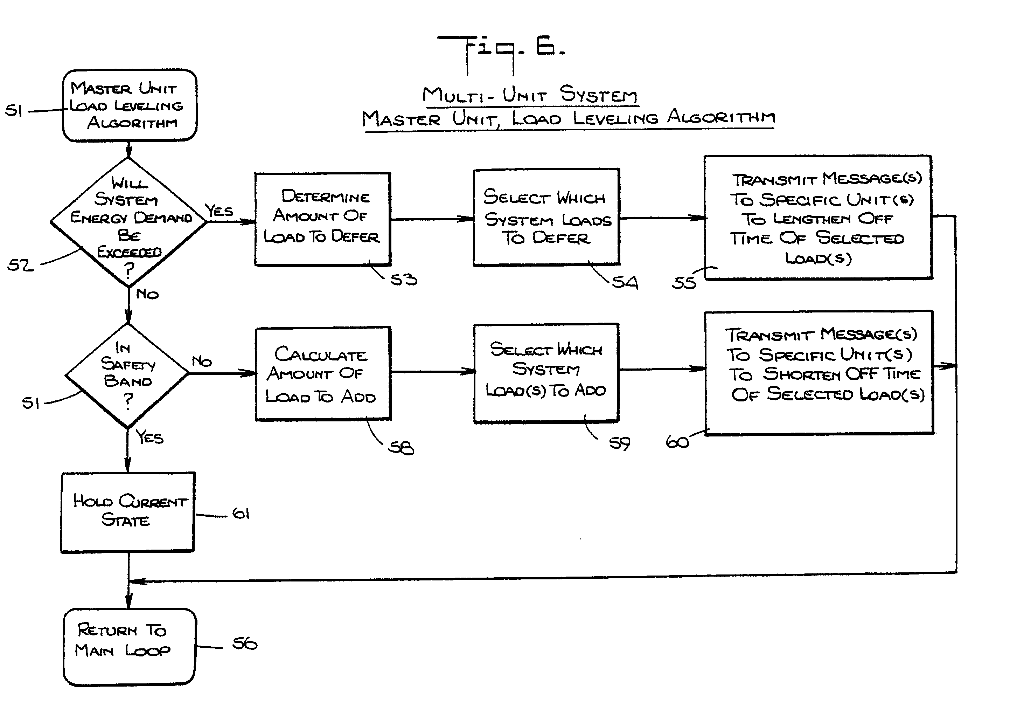

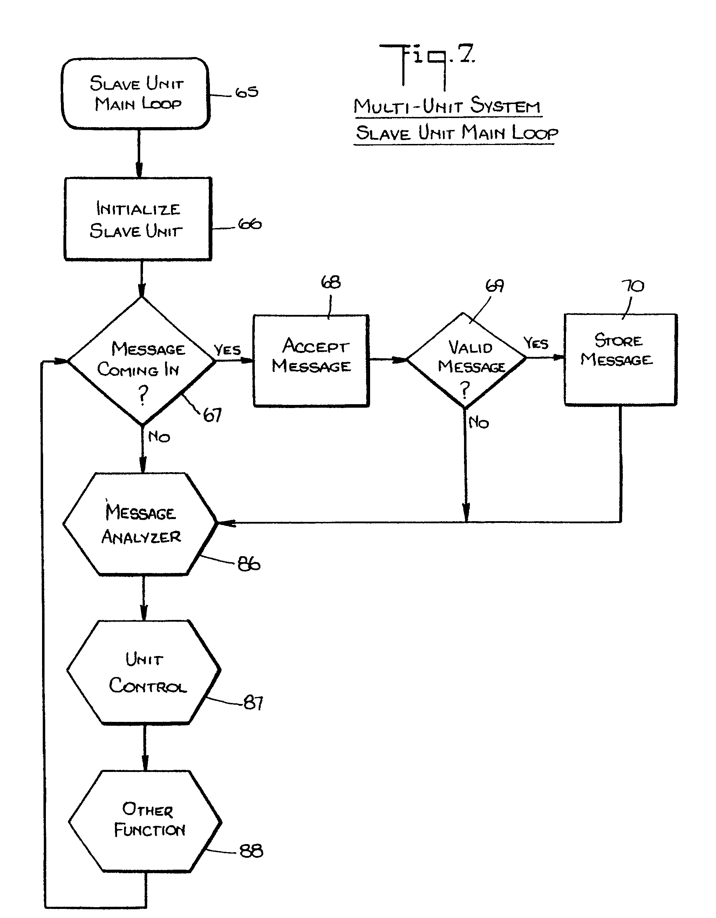

Before referring to the drawings in detail, it will be understood that for purposes of clarity the apparatus represented in block diagrams in Figs. 1-9 utilizes, for example, an analog-to-digital converter in a microprocessor which includes such hardware as a central processing unit, program and random access memories, timing and control circuitry, input-output interface devices and other conventional digital subsystems necessary to the operation of the central processing unit as is well understood by those skilled in the art. The microprocessor operates according to the computer program produced according to the flow charts represented in the drawings.

Referring now more particularly to Fig. 1 of the drawings, there is represented food-processing apparatus for controlling the power utilized by a system including a plurality of electrical loads. More particularly, the food-processing apparatus includes a microcomputer 10 preferably at the cooking vat. The microcomputer 10 includes a central processing unit which receives an input from a keyboard 11 which may, for example, comprise a capacitive keyboard.

The food processing apparatus includes a conventional power supply 12, a reset circuit 13 for resetting the microcomputer when renewing power in the power supply, a clock oscillator 14 for providing clock pulses to the microcomputer 10, a temperature sensor circuit 15 for sensing the temperature within the food processing apparatus, an audible alarm 16, an alpha/numeric display 17 and indicator lights 18. The food-processing apparatus also includes a communication port 19 for the microcomputer 10. The microcomputer 10 controls an output relay circuit 20 which may, for example, control the gas valves of a burner or a heating element or microwave or other means 21. The microcomputer 10 also controls, for example, a remote status indicator 24 and an air-conditioning system 25. As will be more fully explained subsequently, the communication port 19 is provided for transmitting signals to and from other apparatus.

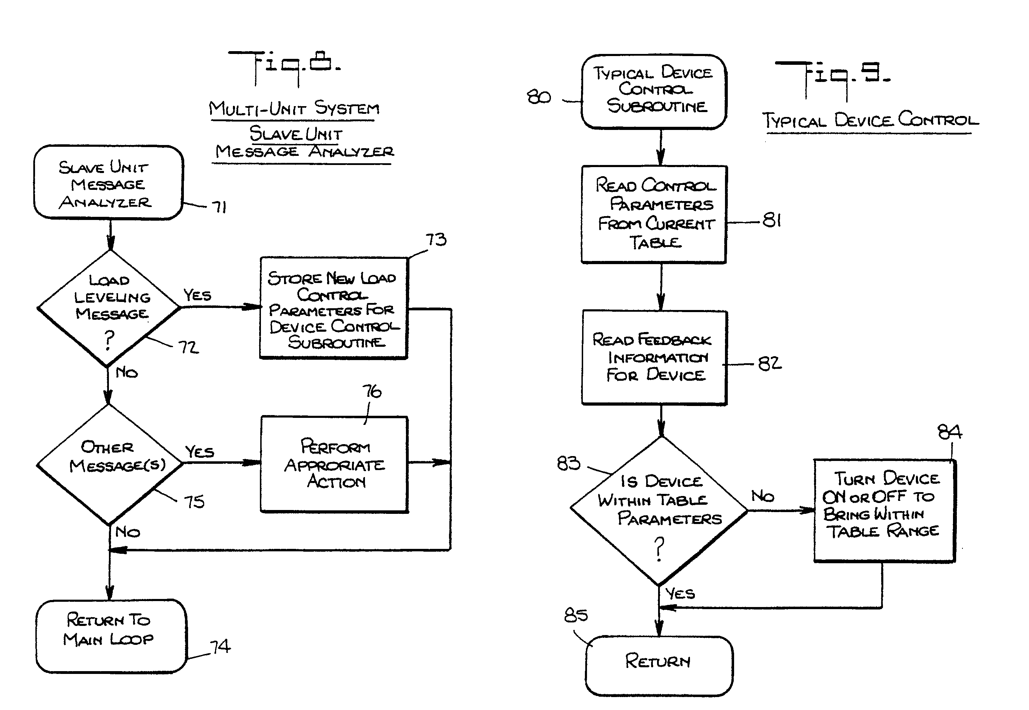

Referring now more particularly to Fig. 2 of the drawings, there is represented food-processing apparatus which includes a plurality of cooking computer systems 26, 27 coupled by a communication line 28. The cooking computer system 26 is a master cooking computer system and the cooking computer system 27 is a slave cooking computer system as will be explained more fully subsequently. Each of the cooking computer systems 26, 27 may include loads such as one or more of the temperature control means 21 and the air conditioning system 25 of Fig. 1. The master and slave systems are in the same restaurant.

Considering now the operation of the food processing apparatus with reference to Figs. 3 and 4, a single unit system comprising, for example, the Fig. 1 apparatus is a single control unit for one or more devices. The single unit system contains the entire load leveling algorithm within the single control unit. Fig. 3 represents a typical main execution loop for a single unit system. The system begins operation at a "main load leveling" microprocessor portion 30, typically from turning power on. After power stabilization the system is initialized as indicated by "initialize system" microprocessor portion 31. All hardware is set to initial states, tables are verified, control variables are set to known values, all of which are typical operations known to one skilled in the art. The software then enters the main control loop which cycles until power is turned off. The main loop may be paused by interrupts to handle events at predetermined time intervals or to handle selected events.

The main loop includes "perform load leveling operation" microprocessor portion 32, "perform system related operation" microprocessor portion 33 and "perform system function" microprocessor portion 34. The first function in the main loop is to perform the load leveling algorithm, as represented in Fig. 4. After performing the load leveling algorithm the main loop performs other system related functions indicated by microprocessor portion 33 such as generating a display, responding to a key press or timing down a process. Any remaining functions the system may perform occur under the control of "perform system function" microprocessor portion 34. Thus the system performs the load leveling algorithm as one of its many tasks.

Fig. 3 represents the microprocessor portions performing the load leveling operation including "main load leveling" microprocessor portion 30 which is an entry point. The food processing apparatus includes computer control means 10 (Fig. 1) coupled to a plurality of electrical loads 21, 25 (Fig. 1), for controlling the duty cycle of each of the loads 21, 25. Means responsive to the actual power demand of the loads for determining whether a predetermined limit for maximum power demand for the system will be exceeded by the actual power demand of the loads is represented by "will maximum demand be exceeded?" microprocessor portion 36 of Fig. 4. The "yes" output of the microprocessor portion 36 is coupled to a "lengthen off time of prioritized devices" microprocessor portion 37. The apparatus thus includes means responsive to the determining means if the predetermined limit for maximum power demand will be exceeded by actual power demand for reducing the duty cycle of at least one of the loads to reduce the actual power demand. The algorithm determines whether the maximum demand will be exceeded by comparing the calculated load to the maximum system load value. The maximum system load value is user programmable and is stored, for example, in EEPROM (Electrically Erasable Programmable Read Only Memory) within the system hardware. The calculated load is determined by factoring the power requirements of the devices currently operating under the system's control. The user has the capability to change the system configuration, using a programming sequence, by entering the power requirements of a device, priority of the device and other parameters about the device such as which control algorithm to use in controlling it and minimum power on/off times. Such information is stored, for example, in EEPROM hardware.

When the calculations indicate that the maximum demand will be exceeded the list of devices stored in EEPROM is scanned for the lowest priority device that is currently operating and has been "on" the minimum time. This device is put into a power cycle "off" state by microprocessor portion 37. Other devices which may not be currently operating have their running "off" times extended by microprocessor portion 37. This brings the system within the safety band to be explained. The algorithm will then proceed to exit at "return to main loop" microprocessor portion 38.

The apparatus of Fig. 4 includes means responsive to the determining means 36 if the predetermined limit for maximum power demand will not be exceeded by actual power demand for determining whether the actual power demand is in a predetermined safety band below the predetermined limit. When the calculations of microprocessor portion 36 indicate that the maximum demand will not be exceeded, the state of the system is checked for positioning in the user programmable safety band by microprocessor portion 39. The safety band is a range below the maximum allowed demand that allows the covered appliances to operate in a cycled manner. When the demand is below the safety band there is power capability to handle more appliances for operation. When the demand is within the safety band, the equipment and appliances under system control are said to be operating harmoniously. When the system is below the safety band the system adjusts the allowable "OFF" times of the controlled appliances by "shorten off time of prioritized devices" microprocessor portion 40 coupled to the "no" output of microprocessor portion 39. Upon completing the change of energy-allowed demand, the routine will proceed to exit at "return to main loop" microprocessor portion 38. The means for lengthening the "off" period of the duty cycle of one or more prioritized devices comprises means for removing a load of lowest priority which has been on for at least the minimum "on" period. If the demand is within the safety band, the "yes" output of the microprocessor portion 39 applies a signal to the "hold current state" microprocessor portion 41.

The load leveling algorithm accumulates the on/off state of an appliance at, for example, one second intervals for time periods, typically 15 minutes, in, for example, a circular buffer to determine the amount of energy used. A circular buffer is a database that contains a fixed number of data items. When a new data item is acquired, it is placed in the buffer at the place occupied by the oldest data item. Thus only the last n items of data are saved. The circular buffer in an example of a 15 minute sampling of maximum demand would be 900 bits long (60 seconds/minute x 15 minutes = 900 seconds).

The system preferably includes the entire fast food store that the appliance is operating in. In the single unit load leveling system, the multiple appliances in the system are individually programmed to have maximum single unit load values, inferring that multiple single unit load leveling systems may coexist within an individual store. The system configuration can be changed by the user by physically adding and/or removing an appliance from the store. The user must also re-evaluate the store configuration to determine the priority of an appliance. Appliance priorities vary as to the time of day, for instance, fryers would have a lower priority in the breakfast menu time than at lunchtime when they are heavily used. By including a real time clock and calendar in the unit and allowing priority values for each quarter hour of the day, the appliance priority is varied according to expected demand.

The portion of maximum system load allocated to each appliance must also be determined and programmed into each single unit load leveling EEPROM when the appliance configuration is changed. Allocation of maximum system load is performed by programming into each single load leveling system the total (storewide) maximum system requirement and the desired maximum system load. The single load leveling unit can then calculate the percentage of load it contributes to the total load and use that percentage of the desired maximum system load. For example, a fryer rated at 2 kilowatts in a store with 40 kilowatts of appliances contributes to 5% of the load (2/40 = .05) with a desired maximum system load of 20 kilowatts, the unit for the fryer would calculate that it could use 1 kilowatt of the maximum load (20,000 x 0.05 = 1,000).

The control algorithm is selectable. The criteria for selection are based upon the particular device being controlled, for example, fryer, oven, air conditioner or the like and what is recommended by the manufacturer or the purchaser's engineering staff. Examples of type of control algorithms that may be selected are ON/OFF controller, PID controller or a custom controller. To select a controller algorithm, the user enters program mode and makes the selection by setting a code such as 1 for ON/OFF, 2 for PID, and the like. The data entered are stored in the EEPROM hardware for future use by the program.

While in program mode the single unit load leveling controller can be programmed with minimum power ON/OFF times. Typically the mechanical devices that contain the final contacts, especially for electric appliances, deteriorate when exercised frequently. It is therefore desirable to limit the frequency that the contacts are closed or opened. This is achieved by programming and following minimum ON/OFF times. For example, the minimum "ON" time might be 4 seconds and the minimum "OFF" time might be 2 seconds.

The maximum demand safety band is programmable and may, for example, be set to 5% of the maximum demand. The result is that all appliances under control of the single unit load leveling apparatus will be controlled without interruption up to the maximum demand level. When the maximum demand level is exceeded, the single unit load leveling apparatus will scan the list of devices stored in its EEPROM hardware for the lowest priority operating device in order to modify its power cycling. The algorithm will first turn off lowest priority devices that have been on the minimum "ON" time. Next the algorithm will lengthen the "OFF" times of low priority devices by, for example, 1 second. After an evaluation delay time of typically 1 second, the apparatus will evaluate the system again. Appropriate action, either similar to that described above or the opposite will be taken. The opposite action is to shorten the "OFF" times by 1 second on a priority basis.

Referring now to Figs. 5-9, the flow charts of a multi-unit system such as represented in Fig. 2 are there represented. Fig. 5 shows a typical main execution loop for a multi-unit system having an entry at main multi-unit system microprocessor portion 45, typically actuated by turning power on. After power stabilization the system is initialized at "initialize system" microprocessor portion 46. During the initialization all hardware is set to initial states, tables are verified, control variables are set to known values, all being typical operations known to one skilled in the art. The "initialize system" microprocessor portion 46 then actuates the main control loop. This control loop cycles until power is turned off. The main loop may be paused by interrupts, to handle events at predetermined time intervals or selected events.

The main loop includes a "time to test demand?" microprocessor portion 47 having its "no" output applied to a "perform system update" microprocessor portion 48 coupled to a "perform system function" microprocessor portion 49 having its output coupled in a loop to the input of the microprocessor portion 47. The microprocessor portion 47 checks whether it is time to perform the load leveling algorithm. When it is the correct time to perform the load leveling algorithm, the "yes" output of the microprocessor portion 47 applies a signal to the "perform load leveling algorithm" microprocessor portion 50. The load leveling algorithm routine is then executed by microprocessor portion 50, as will be explained more fully subsequently. After executing the load leveling algorithm, the microprocessor portion 50 applies a signal to the main loop. The main loop performs other system related functions such as generating a display, responding to a key press, or timing down a process by microprocessor portion 48. Any remaining functions the system might perform are performed by microprocessor portion 49.

Referring now more particularly to Fig. 6, the master unit load leveling algorithm includes an entry microprocessor portion 51. The "master unit load leveling algorithm" microprocessor portion 51 is coupled to a "will system energy demand be exceeded?" microprocessor portion 52. The microprocessor portion 52 determines whether the maximum demand will be exceeded by comparing the calculated load to the maximum system load value. The maximum system load value is user programmable and is saved in the EEPROM within the system hardware. The calculated load is determined by factoring in the power requirements of the devices currently operating under the system control. The user has the capability to change the system configuration, using a programming sequence, by entering the power requirements of a device, priority of the device, and other parameters about the device such as which control algorithm to use in controlling it and minimum power on/off times. This information preferably is stored in EEPROM hardware.

When the calculations indicate that the maximum demand will be exceeded, the list of devices stored in EEPROM hardware is scanned for the lowest priority device that is currently operating and has been "on" the minimum time by a "determine amount of load to defer" microprocessor portion 53 coupled to a "select which system loads to defer" microprocessor portion 54. The lowest priority device that is currently operating and has been "on" the minimum time is selected to be put into a power cycle "off" state. Other devices which may not be currently operating have their "off" times extended, also based upon the priority table. This brings the system within the safety band. Messages are generated by a "transmit message to specific units to lengthen off times of selected loads" microprocessor portion 55. The specific units mentioned include units other than the master unit, for example, slave units to be described subsequently. The algorithm then exits at "return to main loop" microprocessor portion 56.

When the calculations of microprocessor portion 52 indicate that the maximum demand will not be exceeded, the state of the system is checked for positioning in the user programmable safety band by an "in safety band?" microprocessor portion 57 coupled to the "no" output of microprocessor portion 52. The safety band is arranged below the maximum allowed demand that allows the covered appliances to operate in a cycled manner. When the demand is below the safety band, more appliances can be added in operation. When the demand is within the safety band the equipment and appliances under system control are said to be operating harmoniously. When the system is below the safety band, the system adjusts the allowable OFF times of the controlled appliances by a "calculate amount of load to add" microprocessor portion 58 coupled to the "no" output of the microprocessor portion 57. Using the same priority tables used by microprocessor portion 54, the algorithm in "select which system loads to add" microprocessor portion 59 selects appliance loads to shorten their OFF times. The microprocessor portion 59 is coupled to a "transmit messages to specific units to shorten off time of selected loads" microprocessor portion 60. The specific units to which messages may be transmitted by the microprocessor portion 60 include the master unit and one or more slave units as will be described subsequently. Upon completion of the change of energy demand, the routine exits at "return to main loop" microprocessor portion 56.

When the system is within the safety band as determined by microprocessor portion 57, the routine will not make any changes and the "yes" output of the microprocessor portion 57 is coupled to a "hold current state" microprocessor portion 61 which is coupled to "exit the routine" at microprocessor portion 56. The microprocessor portion 56 is a single point exit for the load leveling algorithm. At the microprocessor portion 56 the routine passes program control back to the main loop represented in Fig. 5.

The multi-unit system contains a master unit represented in Fig. 6 and one or more slave units such as represented in Fig. 7. Fig. 7 represents a flow chart for a typical slave unit operating according to the computer program produced according to the flow chart. The slave unit routine starts when power is turned on at slave unit main loop microprocessor portion 65. The slave unit initializes by an "initialize slave unit" microprocessor portion 66 in a similar manner to the master unit of Fig. 5, coupling the hardware and checking programmable data for integrity. The slave unit includes a "message coming in?" microprocessor portion 67 which is in the main processing loop of the slave unit.

One of the functions in the main loop is to check for incoming messages at microprocessor portion 67. When a message is detected, the slave unit proceeds to receive it and transmit it through the "yes" output of the microprocessor portion 67 to an "accept message" microprocessor portion 68. The microprocessor portion 68 is coupled to a "valid message?" microprocessor portion 69 which checks the message for validity as determined by validation of the length of the message and a check sum. When the message is valid for the slave unit receiving it, it is passed to the incoming message buffer comprising a "store message" microprocessor portion 70. After storing the message, control is passed back to the main loop. When the message is not valid it is discarded and control is passed back to the main loop in the slave unit.

The main loop in the slave unit includes microprocessor portion 67, "message analyzer" microprocessor portion 86, "unit control" microprocessor portion 87 and "other functions" microprocessor portion 88. One of the functions in the main loop performed by "message analyzer" microprocessor portion 86 is to analyze the incoming messages and store the data from the messages, as will be explained more fully subsequently. After execution of the message commands, the message analyzer returns to the main loop as represented by unit control microprocessor portion 87 which proceeds to perform unit control for the slave unit. Microprocessor portion 87 is coupled to "other functions" microprocessor portion 88 which performs other system related operations such as generating a display, responding to a key press, or timing down a process.

The slave unit message analyzer 86 is represented in detail in Fig. 8. The message analyzer has an entry point slave unit message analyzer microprocessor portion 71. The message analyzer retrieves the incoming messages from the incoming message receive buffer ("store message" microprocessor portion 70) to determine their function. The microprocessor portion 71 is coupled to a "load leveling message?" microprocessor portion 72 having a "yes" output coupled to a "store new load control parameters for device control" microprocessor portion 73. The microprocessor portion 73 separates the new load control parameters from the messages and stores them for the unit control subroutines. Then the microprocessor portion 73 passes control to a common exit point "return to main loop" microprocessor portion 74.

When the messages are other than load leveling control messages, the "no" output of the microprocessor portion 72 applies the messages to an "other messages" microprocessor portion 75 which recognizes messages other than load leveling type messages. The microprocessor portion 75 applies such messages through its "yes" output to a "perform appropriate action" microprocessor portion 76. The microprocessor portion 76 then is coupled to the common return microprocessor portion 74. When all messages have been analyzed, control is passed back to the main routine in the slave unit from microprocessor portion 74.

Referring now to Fig. 9, a typical device control, for example, a fryer temperature control, enters through typical device control microprocessor portion 80. The microprocessor portion 80 is coupled to a "read control parameters from current table" microprocessor portion 81. The microprocessor portion 81 reads the device control parameters from a table that has been updated from the EEPROM hardware at initialization or from load leveling messages received from the master unit. The microprocessor portion 81 is coupled to a "read feedback information for device" microprocessor portion 82 which detects feedback information for comparison with table data. An example of feedback data would be the operating temperature of the device. The microprocessor portion 82 is coupled to an "is device within table parameters?" microprocessor portion 83 which compares the feedback information to the table parameters to determine whether action is required. When control action is required, the "no" output of the microprocessor portion 83 applies a signal to a "turn device on or off to bring within table range" microprocessor portion 84. When control action is required, the microprocessor portion 84 modifies the control settings to bring the device within the table range. In either case of modified control or no control action required, the microprocessor portions 83 and 84 are coupled to a "return" microprocessor portion 85 which serves as an exit point from the device control back to the slave unit main loop.

While there have been described what are at present considered to be the preferred embodiments of this invention, it will be obvious to those skilled in the art that various changes and modifications may be made therein without departing from the invention and it is, therefore, aimed to cover all such changes and modifications as fall within the true spirit and scope of the invention.

## Claims

1. Food-processing apparatus for controlling the power utilized by a system including a plurality of loads comprising:
   computer control means in food-processing apparatus and coupled to a plurality of loads which have on and off periods for leveling the total load by the system including computer means responsive to the actual power demand of the loads for determining whether the actual power demand of the loads will exceed a predetermined maximum power demand limit for the system;
   computer means for prioritizing said loads which have on and off periods; and
   computer means responsive to said determining means if said predetermined limit for maximum power demand will be exceeded by actual power demand for lengthening the off period of at least one prioritized load of the system for leveling the total load by the system.

2. Apparatus in accordance with claim 1 which includes computer means responsive to said power-demand determining means if said predetermined limit for maximum power demand will not be exceeded by actual power demand for determining whether the actual power demand is in a predetermined safety band below said predetermined limit

3. Apparatus in accordance with claim 2 which includes computer means for shortening the off period of one or more prioritized loads to bring the actual power demand into the said safety band.

4. Apparatus in accordance with claim 1 in which said loads have minimum on periods and in which said means for lengthening the off period of one or more prioritized loads comprises means for removing a load of lowest priority which has been on for at least the minimum on period.

5. Apparatus in accordance with claim 1 in which said computer control means includes a plurality of coupled computer control means including a master means and a slave means and in which said master means includes means for transmitting messages and in which said slave means includes means for determining whether a message is being received from said master means and means responsive to said message-determining means for checking whether a received message is a valid message.

6. Apparatus in accordance with claim 5 which includes means responsive to said message-checking means for determining whether a received message is a load-leveling message and means responsive to a load-leveling message for storing new load control parameters for one or more loads.

7. Apparatus in accordance with claim 6 in which each of said loads comprises a device including means for reading stored control parameters, means for supplying feedback information for determining whether said device is operating in accordance with said stored control parameters and means for switching said device on or off to bring said device into accordance with said stored control parameters.

8. Apparatus in accordance with claim 1 in which said loads comprise cooking devices.

9. Apparatus in accordance with claim 1 in which said loads comprise cooking and cooling devices.

10. Apparatus in accordance with claim 1 in which said loads comprise cooking and air-conditioning devices.

11. A master-slave food-processing apparatus for controlling the power utilized by a system including a plurality of slave-controlled loads comprising:
a plurality of slave computer control means in food-processing apparatus for controlling the power usage of each of said loads for leveling the total load of the system;
master computer means responsive to the actual power demand of said loads for determining whether a predetermined limit for maximum power demand for the system will be exceeded by the actual power demand of said loads; and
slave computer means responsive to said determining means if said predetermined limit for maximum power demand will be exceeded by actual power demand for reducing the power usage of at least one of said loads to reduce said actual power demand.

12. Apparatus in accordance with claim 11, which includes master-computer means for prioritizing said loads which have on and off periods and in which said computer means for reducing the power usage comprises means for lengthening the off period of the duty cycle of one or more prioritized loads.

13. Apparatus in accordance with claim 11, which includes computer means responsive to said determining means if said predetermined limit for maximum power demand will not be exceeded by actual power demand for determining whether the actual power demand is in a predetermined safety band below said predetermined limit.

14. Apparatus in accordance with claim 13 which includes computer means for prioritizing said loads which have on and off periods and slave computers means for shortening the off period of the duty cycle of one or more prioritized loads to bring the actual power demand into said safety band.

15. Apparatus in accordance with claim 12 in which said slave-controlled loads have minimum on periods and in which said means for lengthening the off period of the duty cycle of one or more prioritized loads comprises means for removing a load of lowest priority which has been on for at least the minimum on period.

16. A master-slave food-processing apparatus for controlling the power utilized by a system, comprising:
a plurality of slave-controlled loads;
a plurality of coupled computer control means in food-processing apparatus, each of said apparatus constituting a part of a total electrical load;
master computer means responsive to the actual power demand of said total load for calculating whether a predetermined limit for maximum power demand for the system will be exceeded by the actual power demand of said total load; and
a plurality of slave computer control means responsive to said calculating means if said predetermined limit for maximum power demand will be exceeded by actual power demand for reducing the power usage of at least one of said parts of said total load to reduce said actual power demand.

17. Apparatus in accordance with claim 16 which includes means for determining repetitive times for calculating power demand.

18. Apparatus in accordance with claim 16 in which one of said computer control means is a master computer control means and in which said computer means for reducing the power usage of at least one of said slave-controlled loads includes means for determining the amount of load to defer, means for selecting which loads to defer, and means for transmitting a load-leveling message to another of said slave computer control means to lengthen the off period of a selected load.

19. Apparatus in accordance with claim 16 which includes a master computer means responsive to said calculating means if said predetermined limit for maximum power demand will not be exceeded by actual power demand for determining whether the actual power demand is in a predetermined safety band below said predetermined limit.

20. Apparatus in accordance with claim 19 which includes master computer means for prioritizing said loads which have on and off periods and slave computer means for shortening the off period of the power usage of one or more prioritized loads to bring the actual power demand into said safety band.

21. Apparatus in accordance with claim 16 in which said plurality of coupled computer control means includes a master computer control means and a slave computer control means and in which said master means includes means for transmitting load-leveling messages and in which said slave means includes means for determining whether a load-leveling message is being received from said master means and means responsive to said load-leveling message-determining means for checking whether a received message is a valid load-leveling message.

22. Apparatus in accordance with claim 21 which includes means responsive to said load-leveling message-checking means for determining whether a received message is a load-leveling message and means responsive to a load-leveling message for storing new load control parameters for one or more loads.

23. Apparatus in accordance with claim 22 in which each of said slave-controlled loads comprises a device including means for reading stored control parameters, means for supplying feedback information for determining whether said device is operating in accordance with said stored control parameters and means for switching said device on or off to bring said device into accordance with said stored control parameters.

24. Apparatus in accordance with claim 11 in which said loads comprise cooking devices.

25. Apparatus in accordance with claim 16 in which said loads comprise cooking devices.

26. Apparatus in accordance with claim 11 in which said loads comprise cooking and cooling devices.

27. Apparatus in accordance with claim 16 in which said loads comprise cooking and cooling devices.

28. Apparatus in accordance with claim 11 in which said loads comprise cooking and air-conditioning devices.

29. Apparatus in accordance with claim 16 in which said loads comprise cooking and air-conditioning devices.

30. A method for controlling the power utilized by a system including a plurality of food-processing apparatus comprising:
controlling by integral computers the duty cycle of each of a plurality of slave-controlled electrical loads;
determining by a master computer controller in response to the actual power demand of the loads whether a predetermined limit for maximum power demand for the system will be exceeded by the actual power demand of the loads; and
reducing the power usage of at least one of the slave-controlled loads to reduce the power demand if the predetermined limit for maximum power demand will be exceeded by actual power demand.

31. A method in accordance with claim 30, which includes prioritizing the loads which have on and off periods and in which reducing the power usage comprises lengthening the off period of one or more prioritized loads.

32. A method in accordance with claim 30, which includes determining whether the actual power band is in a predetermined safety band below the predetermined limit for maximum power if the predetermined limit for maximum power demand will not be exceeded by actual power demand.

33. A method in accordance with claim 30, which includes prioritizing the loads which have on and off periods and shortening the off period of one or more prioritized loads to bring the actual power demand into the safety band.

34. A method in accordance with claim 31, in which the loads have minimum on periods and in which lengthening the off period of one or more prioritized loads comprises removing a load of lowest priority which has been on for at least the minimum on period

35. A method for controlling the power utilized by a system including a plurality of computer-controlled food processing apparatus loads comprising:
controlling the power usage of each of a plurality of food-processing electrical loads by a plurality of coupled computer control means integral to the food-processing apparatus;
determining whether a predetermined limit for maximum power demand for the system will be exceeded by the actual power demand of the loads; and
reducing the power usage of at least one of the loads to reduce the actual power demand if the predetermined limit for maximum power demand will be exceeded by actual power demand.

36. A method in accordance with claim 35 which includes determining repetitive times for testing power demand.

37. A method in accordance with claim 35 in which reducing the power usage of at least one of the loads includes determining the amount of load to defer, selecting which load to defer, and transmitting a load-leveling message to another of the computer control means to lengthen the off period of a selected load.

38. A method in accordance with claim 35 which includes determining whether the actual power demand is in a predetermined safety band below the predetermined limit if the predetermined limit for maximum power demand will not be exceeded by actual power demand.

39. A method in accordance with claim 38 which includes prioritizing the loads which have on and off periods and shortening the off period of the duty cycle of one or more prioritized loads to bring the actual power demand into the safety band.

40. A method in accordance with claim 35 which includes transmitting messages from a master computer control means to a slave computer control means and determining by the slave means whether a message is being received from the master means and checking whether a received message is a valid message.

41. A method in accordance with claim 40 which includes determining whether a received message is a load-leveling message and storing new load control parameters for one or more loads.

42. A method in accordance with claim 41 which includes reading stored control parameters, supplying feedback information for determining whether the operation is in accordance with the stored control parameters and switching a device on or off to bring the device into accordance with the stored control parameters.

Fig. 1.

COMMUNICATION PORT — 19

TEMPERATURE SENSOR CIRCUIT — 15

ALPHA/NUMERIC DISPLAY — 17

ALARM CIRCUIT — 16

INDICATOR LIGHTS — 18

CLOCK — 14

MICROCOMPUTER — 10

OUTPUT RELAY CIRCUIT — 20

DC RESET — 13

GAS BURNER OR MICROWAVE OR OTHER TEMPERATURE CONTROL MEANS — 21

POWER SUPPLY — 12

24 — REMOVE STATUS INDICATOR

KEYBOARD — 11

AIR CONDITIONING SYSTEM — 25

# Fig. 2.

| MASTER COOKING COMPUTER SYSTEM | | SLAVE COOKING COMPUTER SYSTEM |
|---|---|---|

28

COMMUNICATION LINE

26    27

# Fig. 3.

## LOAD LEVELING MAIN EXECUTION LOOP

30 — **MAIN LOAD LEVELING**

31 — **INITIALIZE SYSTEM**

32 — **PERFORM LOAD LEVELING OPERATION**

33 — **PERFORM SYSTEM RELATED OPERATION**

34 — **PERFORM SYSTEM FUNCTION**

**Fig. 4.**

SINGLE UNIT LOAD LEVELING

- SINGLE UNIT LOAD LEVELING — 35
- WILL MAXIMUM DEMAND BE EXCEEDED ? — 36
  - YES → LENGTHEN OFF TIME OF PRIORITIZED DEVICE(S) — 37
  - NO → IN SAFETY BAND ? — 39
    - NO → SHORTEN OFF TIME OF PRIORITIZED DEVICES — 40
    - YES → HOLD CURRENT STATE — 41
- RETURN TO MAIN LOOP — 38

**Fig. 5.**

MULTI-UNIT SYSTEM MAIN LOOP

- MAIN MULTI-UNIT SYSTEM — 45
- INITIALIZE SYSTEM — 46
- TIME TO TEST DEMAND
  - YES → PERFORM LOAD LEVELING ALGORITHM — 50
  - NO → PERFORM SYSTEM UPDATE — 48
- PERFORM SYSTEM FUNCTION — 49

Fig. 6.

MULTI- UNIT SYSTEM
MASTER UNIT, LOAD LEVELING ALGORITHM

MASTER UNIT LOAD LEVELING ALGORITHM — 51

WILL SYSTEM ENERGY DEMAND BE EXCEEDED ? — 52

YES → DETERMINE AMOUNT OF LOAD TO DEFER — 53 → SELECT WHICH SYSTEM LOADS TO DEFER — 54 → TRANSMIT MESSAGE(S) TO SPECIFIC UNIT(S) TO LENGTHEN OFF TIME OF SELECTED LOAD(S) — 55

No → IN SAFETY BAND ? — 51

No → CALCULATE AMOUNT OF LOAD TO ADD — 58 → SELECT WHICH SYSTEM LOAD(S) TO ADD — 59 → TRANSMIT MESSAGE(S) TO SPECIFIC UNIT(S) TO SHORTEN OFF TIME OF SELECTED LOAD(S) — 60

YES → HOLD CURRENT STATE — 61

RETURN TO MAIN LOOP — 56

EP 0 456 872 A1

Fig. 7.

MULTI-UNIT SYSTEM
SLAVE UNIT MAIN LOOP

# Fig.8.

MULTI-UNIT SYSTEM
SLAVE UNIT
MESSAGE ANALYZER

SLAVE UNIT MESSAGE ANALYZER — 71

LOAD LEVELING MESSAGE ? — 72 → YES → STORE NEW LOAD CONTROL PARAMETERS FOR DEVICE CONTROL SUBROUTINE — 73

NO

OTHER MESSAGE(S) — 75 → YES → PERFORM APPRORIATE ACTION — 76

NO

RETURN TO MAIN LOOP — 74

# Fig.9.

TYPICAL DEVICE CONTROL

80 → TYPICAL DEVICE CONTROL SUBROUTINE

READ CONTROL PARAMETERS FROM CURRENT TABLE — 81

READ FEEDBACK INFORMATION FOR DEVICE — 82

83 — IS DEVICE WITHIN TABLE PARAMETERS ? → NO → TURN DEVICE ON OR OFF TO BRING WITHIN TABLE RANGE — 84

YES

85 → RETURN

EP 0 456 872 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-55315 (CYBOREX LABORATORIES INC.) * page 4, line 6 - page 6, line 17; figures 1-3 * | 1, 2, 6, 8, 10, 11, 14-17 | H02J3/14 A47J27/62 |
| A | * page 9, lines 7 - 22 * | 3-5, 7, 9, 12, 13, 18, 19 | |
| Y | EP-A-285056 (FOOD AUTOMATION SERVICE TECHNIQUES INC.) * page 2, column 1, line 1 - page 3, column 3, line 1; figures 1, 2 * | 1, 2, 6, 8, 10, 11, 14-17 | |
| A | | 3-5, 7, 9, 12, 13, 18, 19 | |
| A | GB-A-2073455 (APPLIANCE CONTROL SYSTEMS PTY. LTD.) * page 1, lines 5 - 32; claims 1-45; figure 1 * | 1-19 | |
| A | EP-A-208597 (ELECTRICITE DE FRANCE) * page 2, line 16 - page 3, line 29; figure 3 * | 1-19 | TECHNICAL FIELDS SEARCHED (Int. Cl.5 ) H02J A47J |
| A | PATENT ABSTRACTS OF JAPAN vol. 6, no. 70 (P-113)(948) 06 May 1982, & JP-A-57 8811 (TOKYO SHIBAURA DENKI K.K.) 18 January 1982, * the whole document * | 1-19 | |
| A | EP-A-343383 (CURTI S.N.C. DI CURTI & C.) * page 2, column 1, line 1 - column 2, line 20; figures 1-3 * | 1-19 | |

The present search report has been drawn up for all claims

| Place of search | Date of completion of the search | Examiner |
|---|---|---|
| THE HAGUE | 07 JANUARY 1991 | SCHOBERT D.A.V. |